(19)

Europäisches
Patentamt
European
Patent Office
Office européen
des brevets

(11) **EP 3 588 449 A1**

(12) **EUROPEAN PATENT APPLICATION**

(43) Date of publication:
**01.01.2020 Bulletin 2020/01**

(51) Int Cl.:
*G06T 19/20* (2011.01) *G06T 5/00* (2006.01)

(21) Application number: **18305831.2**

(22) Date of filing: **29.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **THOMSON LICENSING**
**92130 Issy les Moulineaux (FR)**

(72) Inventors:
• **ZHAO, Yanli**
**London, Greater London W1F 0NL (GB)**
• **GOUDER, Darryl**
**London, Greater London W1F 0NL (GB)**
• **VALDEZ, Adam**
**London, Greater London W1F 0NL (GB)**

(74) Representative: **Vidon Brevets & Stratégie**
**16B, rue de Jouanet**
**BP 90333**
**35703 Rennes Cedex 7 (FR)**

(54) **DEVICES, SYSTEMS, AND METHODS FOR COLOR CORRECTING DIGITAL IMAGES**

(57) Devices, systems, and methods (100, 300, 500, 600, 800, 900) for color correcting an image are provided. In one aspect, data representing an image is processed (804, 922) to produce a three-dimensional (3-D) point cloud of a color distribution of pixels of the image. The 3-D point cloud is further processed (806, 922) to create a 3-D mesh of the 3-D point cloud. The 3-D mesh is outputted (924) for display in a graphical user interface that receives (808, 926) at least one user input representing a manipulation of at least a portion of the 3-D mesh. Based on the manipulation of the at least a portion of the 3-D mesh, a color transformation of at least one of the pixels of the image is calculated (810, 930) and the data representing the image is modified (812, 910) to apply the color transformation to the image.

FIG. 8

**EP 3 588 449 A1**

**Description**

**TECHNICAL FIELD**

The present disclosure generally relates to digital image processing. More particularly, the present disclosure is related to devices, systems, and methods for color correcting digital images.

**BACKGROUND**

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Color correction tools are used to alter or correct the colors in digital images. Traditional means of storing colors associated with digital images consist of separate red/green/blue (RGB) or hue/saturation/value (HSV) channels. The tools for altering the colors stored often involve performing mathematical operations on the colors to make simple color alterations. However, complex, delicate or technically challenging color manipulation across entire images requires extensive chains of such math operators, combined with various means of isolating or addressing colors in the image. This sum methodology has several flaws:

1) Individual operators are blunt tools, and inherently address all colors within the image equally and by the same amount, even if this is not the intention of the user;
2) Images can be thought of less as a bunch of individual colors, but colors subtly blending together across the frame. From pixel to pixel, the color is constantly changing. Traditional tools don't allow for gentle influences of these areas while preserving color separation/identity;
3) Targeting, or isolating colors per mathematical operator creates new problems. Usually this is done via hand-made mask, or by mathematically identifying colors to operate on. This approach causes new problems to emerge as a series of targeted operators can conflict, creating visual artifacts;
4) If a color or color range needs to be changed significantly, dealing with transitions from that color to others which blend with it is very difficult or impossible; and/or
6) There is no visualization of the colors being targeted or transforms themselves.

Given the shortcomings of existing color correction tools, a need exists for color correction techniques that allow a user to make complicated, delicate color alterations to images quickly, intuitively, and efficiently.

**SUMMARY**

Devices, systems, and method for color correcting digital images are provided.

According to one aspect of the present disclosure, a method is provided including processing data representing an image to produce a three-dimensional (3-D) point cloud of a color distribution of pixels of the image; processing the 3-D point cloud to create a 3-D mesh of the 3-D point cloud; receiving at least one user input representing a manipulation of at least a portion of the 3-D mesh; calculating a color transformation of at least one of the pixels of the image based on the manipulation of the at least a portion of the 3-D mesh; and modifying the data representing the image to apply the color transformation to the image.

According to another aspect, an apparatus is provided including at least one processor configured to process data representing an image to produce a 3-D point cloud of a color distribution of pixels of the image; process the 3-D point cloud to create a 3-D mesh of the 3-D point cloud; receive at least one user input representing a manipulation of at least a portion of the 3-D mesh; calculate a color transformation of at least one of the pixels of the image based on the manipulation of the at least a portion of the 3-D mesh; and modify the data representing the image to apply the color transformation to the image.

**BRIEF DESCRIPTION OF THE DRAWINGS**

These, and other aspects, features and advantages of the present disclosure will be described or become apparent from the following detailed description of the preferred embodiments, which is to be read in connection with the accompanying drawings.

FIG. 1 is a block diagram of a color correction system in accordance with an embodiment of the present disclosure;

FIG. 2 illustrates a three-dimensional (3-D) point cloud associated with at least a portion of an image in accordance with an embodiment of the present disclosure;

FIG. 3 is a method for color correcting an image based on manipulating the 3-D point cloud associated with the image in accordance with an embodiment of the present disclosure;

FIG. 4A illustrates a lattice in accordance with an embodiment of the present disclosure;

FIG. 4B illustrates a graphical user interface for color correcting an image based on deforming a lattice disposed over a 3-D point cloud associated with the image in accordance with an embodiment of the present disclosure;

FIG. 4C illustrates the graphical user interface of FIG. 4B after the lattice has been deformed in accordance with an embodiment of the present disclosure;

FIG. 5 is a method for color correcting an image based on deforming a lattice disposed over a 3-D point cloud associated with the image in accordance with an embodiment of the present disclosure;

FIG. 6 is a block diagram of another color correction system in accordance with an embodiment of the present disclosure;

FIGS. 7A-7F illustrate a graphical user interface for color correcting an image based on manipulating a 3-D mesh associated with the image in accordance with an embodiment of the present disclosure;

FIG. 7G illustrates several points in the 3-D mesh associated with the image being selected within the graphical user interface of FIGS. 7A-7F in accordance with an embodiment of the present disclosure;

FIG. 7H illustrates the 3-D mesh of FIG. 7G after the 3-D mesh has been manipulated in accordance with an embodiment of the present disclosure; and

FIGS. 7I and 7J illustrate a multiwindow environment including a first graphical user interface displaying the 3-D mesh of FIGS. 7G and 7H and a second graphical user interface displaying at least one view of the image being color corrected in accordance with an embodiment of the present disclosure;

FIG. 8 is a method for color correcting an image based on manipulating a 3-D mesh associated with the image in accordance with an embodiment of the present disclosure; and

FIG. 9 is a method for color correcting a sequence of images based on manipulating a 3-D mesh associated with at least a first image in accordance with an embodiment of the present disclosure.

It should be understood that the drawing(s) are for purposes of illustrating the concepts of the disclosure and is not necessarily the only possible configuration for illustrating the disclosure.

## DETAILED DESCRIPTION

It also should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Existing image manipulation software portray and allow modification of the colors in an image in two dimensions (2-D) and portray the colors from a pixel perspective. The devices, systems, and method of the present disclosure challenge these previous methods by treating the image as a distribution of colors (or luminance values, depending on the color space the image is viewed in) in a color space. The distribution of colors are represented as a three-dimensional (3-D) point cloud to a user. In one aspect of the present disclosure, the 3-D point cloud is manipulated (via translation of one or more points in the point cloud) directly by the user to make color corrections to the image. In another aspect of the present disclosure, a lattice is generated over the 3-D point cloud, and when the user deforms the lattice, the 3-D point cloud is deformed to make color corrections to the image. In yet another aspect of the present disclosure, the 3-D point cloud is processed to generate a 3-D mesh of the 3-D point cloud. The 3-D mesh may then be manipulated in many ways (translation, rotation, scaling, deformation, etc.) using any one of a plurality of tools, such as, but not limited to a lattice deformer, a wrap deformer, selection, a blendshape deformer, etc. by the user to make color corrections to the image. By building a 3-D mesh that represents the distribution of colors of an image and enabling a user to manipulate the 3-D mesh using a lattice deformer or other manipulation tool, a user may manipulate, sculpt, deform, or transform the 3-D mesh in an analogous manner to what a 3-D modelling artist might do to a mesh. In another aspect of the present disclosure, the transformations on the 3-D mesh can be persisted as they are acting on the color space, and then applied to other 2-D images, allowing the user to perform color space operations on one frame of a shot and the transformation cascades onto the remaining frames.

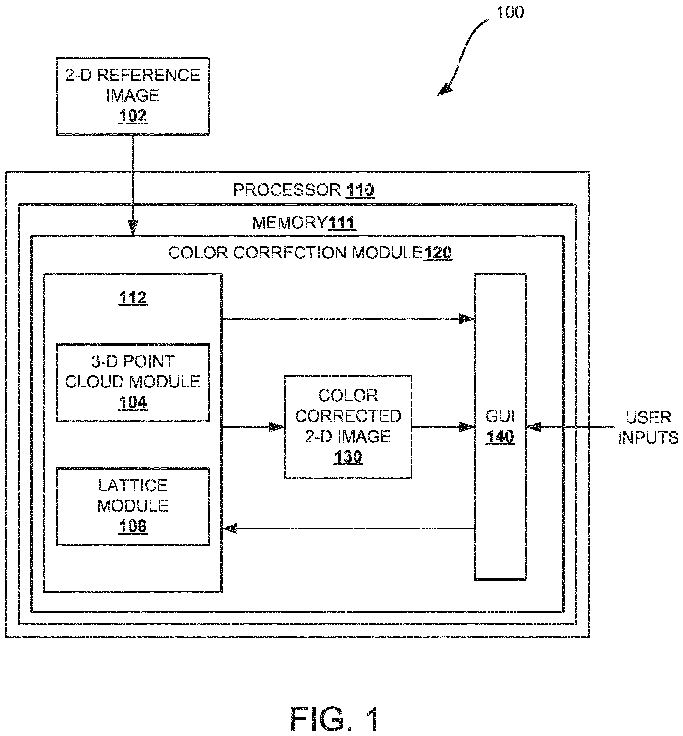

Referring to FIG. 1 a color correction system 100 is shown in accordance with the present disclosure. In system 100, a 2-D reference image 102 is input to a processor 110, of a computer. The computer is implemented on any of the various known computer platforms having hardware such as one or more central processing units (CPU), memory 111 such as random access memory (RAM) and/or read only memory (ROM) and input/output (I/O) user interface(s) such as a keyboard, cursor control device (e.g., a mouse or joystick) and display device. The computer platform also includes an operating system and micro instruction code. The various processes and functions described herein may either be part of the micro instruction code or part of a software application program (or a combination thereof) which is executed via the operating system. In one embodiment, the software application program is tangibly embodied on a program storage device, which may be uploaded to and executed by any suitable machine such as processing device 110. In addition, various other peripheral devices may be connected to the computer platform by various interfaces and bus structures, such a parallel port, serial port or universal serial bus (USB).

A color correction module 120 is stored in memory 111 and executed by processor 110. Color correction module 120 includes a 3-D digital content creation module 112 and a graphical user interface (GUI) 140. 3-D digital content creation module 112 includes a 3-D point cloud module 104, a mesh module 106, and a lattice module 108. It is to be appreciated that, in some embodiments, module 112 may be configured as a plugin for existing 3-D digital content creation applications. In some embodiments, module 112 may be a standalone 3-D digital content creation application.

2-D reference image 102 is received as input to module 112. 3-D point cloud module 104 is configured to extract the data representing the image 102 and process the data to produce a 3-D point cloud of the color distribution of the pixels in the image 102. The 3-D point cloud is then outputted to GUI 140 to be displayed to the user. To produce the 3-D point cloud, module 104 is configured to determine, based on the image data extracted, the format of image 102. If the image 102 is in red blue green alpha (RGBA) format, the color space that the 3-D point cloud is represented within will be in the shape of a cube, with black having an x, y, z location of (0,0,0) and white having an x, y, z location of (1,1,1). If the image 102 is in hue, saturation, value (HSV) format, the shape of the 3-D space will be cylindrical. The 3-D point cloud created by module 104 can also be described as a 3-D histogram.

To build the 3-D histogram into an RGB-space cube, we must define the resolution r of the cube. For example, if we define the cube to have a resolution of 10, the 0 to 1 floating point color interval is divided in 10, where each sub-cube in our color cube has a 0.1 range [0-0.1],(0.1,0.2],(0.2,0.3] and so forth. Each sub-cube's size in the 3-D cloud is proportional to the number of pixels of the image 102 that fall in that color interval. In one embodiment, the number of pixels that fall into a color interval is capped at a predetermined threshold amount, hence we define a value $t$ for this predetermined threshold, which is the maximum number of pixels before the point in the 3-D point cloud is fixed in terms of radius size. Finally, we populate each sub-cube with a count of the pixels in that color interval, coloring each sub-cube with the median of the interval and set their x-y-z position coordinates within the space to their color value. This results in an accurate 3-D histogram-like distribution (i.e., a point could) of the colors in the image. The coordinates and size of each point are provided to GUI 140, wherein GUI 140 is configured to display the points in the 3-D point cloud.

As will be described below, in one embodiment, the 3-D point cloud is disposed in a 3-D environment within GUI 140 along with the reference image 102. As user inputs are received by GUI 140 to manipulate (e.g., translate) the positions of the points the 3-D point cloud, these changes are provided to 3-D point cloud module 104 to determine the color transformations or color shifts of the pixels associated with the manipulated points. The data representing the image 102 is then modified to apply the color transformations to the image. A color corrected 2-D image 130 (i.e., an image include the color transformations to image 102) is then outputted to GUI 140 and displayed to the user, such that, the user can monitor changes made to the image 102 as the 3-D point cloud is manipulated within GUI 140.

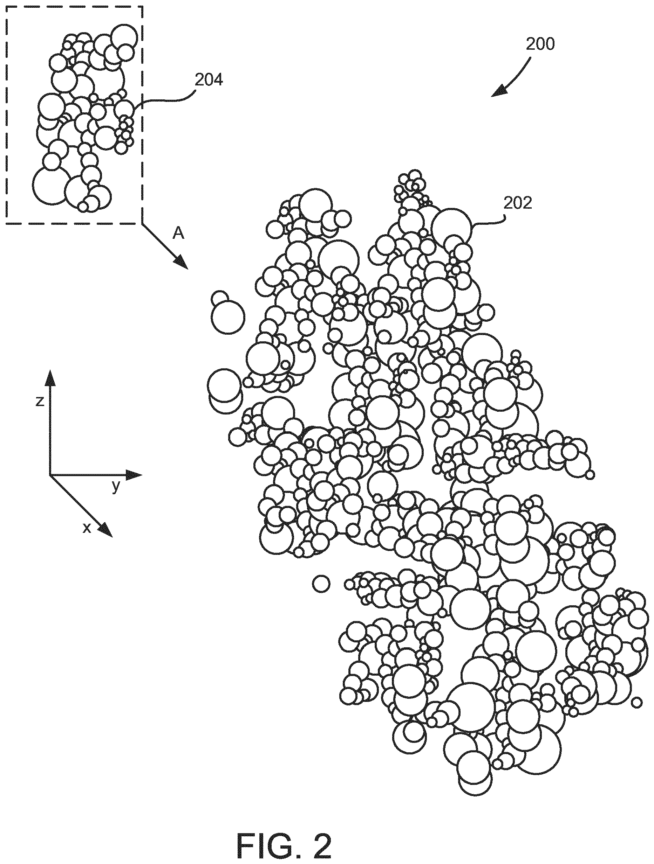

Referring to FIG. 2, an exemplary 3-D point cloud 200 produced by 3-D point cloud module 104 and displayed in GUI 140 is shown in accordance with the present disclosure. The 3-D point cloud 200 is displayed a 3-D rectilinear space having x, y, z axes is shown in FIG. 2. The x, y, z axes of the 3-D space may represent red & green & blue or hue & saturation & value, respectively, depending on the format of the image 102 received by module 120. The 3-D point cloud 200 includes a plurality of points 202, generated by module 104 using the image data extracted, as described above. The 3-D color space is divided into bins by module 104 and each unique color in the image 102 is taken and in these bins. The bins are then plotted in the 3-D space of GUI 140, with each axis representing red & green & blue or hue & saturation & value. This forms a cloud 200 of colored points 202 that is outputted to GUI 140 and displayed to a user. It is to be appreciated that GUI 140 displays each point 202 in cloud 200 as having the color associated with that point.

As described above, a histogram-like component is added to each point 202, where point size is correlative to the number of pixels in the image which are of that color. As shown in FIG. 2, points 202 are configured with different point sizes based on the color distribution of pixels in the received image 102. For example, if image 102 includes many red pixels of the same color value and few blue pixels of the same color value, module 104 will produce a 3-D point cloud 200 with big red points and small blue points. In this way, by evaluating the position, color, and size of each point in cloud 200, a user can easily determine the color density and distribution of the pixels in a photo visually without needing to perform complicated mathematical operations.

GUI 140 is configured to receive inputs from a user representing one or more manipulations of points 202 in cloud 200 to create a color transformation or re-mapping of the pixels associated with the manipulated points 202. For example, a user may select a point 202 of cloud 200 within GUI 140 and translate the selected point 202 from a first position to a second position. GUI 140 is configured to track the position of the translated point 202 and send the translated position of the point 202 to module 104. Module 104 is then configured to modify the color data of each of the pixels of image 102 associated to the translated point 202 to have the color associated to the new position of the translated point 202. For example, if a translated point 202 is translated to a new x, y, z position of (0.1, -0.2, 0.3) within the color space of GUI 140, module 104 is configured to modify the color values of the points associated with the translated point 202 to have the color values (0.1, -0.2, 0.3) of the new position of the translated point 202.

It is to be appreciated that GUI 140 is configured to enable a user to select any number of the point 202 in cloud 200 to be translated. In this way, the user may select all of the points 202 or a portion of all of the points 202 within cloud 200 to be translated by the same amount or distance within the 3-D space. For example, as shown in FIG. 2, a portion 204 of cloud 202 may be selected by a user within GUI 140 and translated within the color space along the x, y, and/or z axes to change the location of the points in portion 204 within the color space. GUI 140 is configured to track the translation of the points in portion 204 and send this information to module 104. Module 104 is then configured to change the color of the pixels associated with these points 202 of portion 204 based on the new position of the points 202 of portion 204 within the color space. For example, moving points 202 of portion 204 along the red axis (e.g., x axis) increases or decreases red in the colors of the translated points accordingly. Moving through all the axes, one can move any unique RGB color to any other.

It is to be appreciated that, in one embodiment, a user may select a portion of image 102 displayed in GUI 140 and 3-D point cloud module 104 is configured to indicate which points 202 within cloud 200 are associated to the pixels in the portion of the image 102 selected by the user. For example, in FIG. 2, the points 202 in portion 204 may be associated with the selected portion of the image 102. In this way, when portion 204 is translated within the color space to a new location, only the pixels in the selected portion of the image 102 are color shifted by module 104.

It is to be appreciated that the color data of image 102/130 may be stored in module 104, in a separate database of memory 111, or in a database stored separately from memory 111 (e.g., a server processor 110 is in communication with, a storage medium coupled to processor 110, etc.)

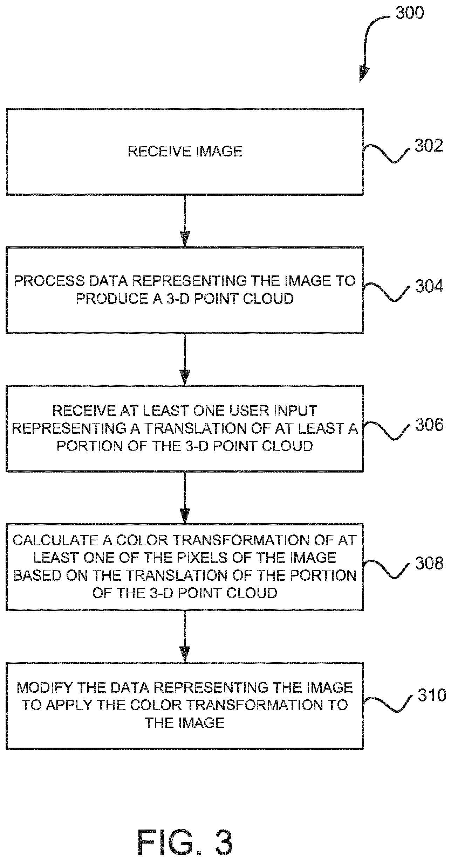

Referring to FIG. 3, a method 300 for color correcting a digital image based on manipulating the 3-D point cloud of the image is shown in accordance with an embodiment of the present disclosure. It is to be appreciated that method 300 may be executed using the color correction system 100 described above.

In step 302, a 2-D reference image, such as image 102, is received by color correction module 120 and provided to 3-D point cloud module 104. In step 304, 3-D point module 104 is configured to extract the data representing the image 102 and process the data to produce a 3-D point cloud of a color distribution of pixels of the image 102 based on the extracted data. For example, as described above, 3-D point cloud module 104 may produce a 3-D point cloud 200 including a plurality of points 202 disposed throughout a point space x, y, z. The position of each point 202 in the 3-D space is associated with a color present in at least one pixel of the image 102 and the size of each point 202 of the 3-D point cloud 200 is associated with the number of pixels within the image 102 that are populated with a particular color of the color space. The produced 3-D point cloud of step 304 and the image 102 are outputted to GUI 140 to be displayed to a user.

In step 306, GUI 140 is configured to receive at least one user input representing a translation of at least a portion (e.g., one or more points 202) of the 3-D point cloud to a new coordinate position within the 3-D space defined by the x, y, z axes. The information associated with the translation (i.e., the new coordinate position of the translated points 202) is provided by GUI 140 to module 104. In step 308, module 104 is configured to calculate the color transformation (e.g., the change in x, y, z coordinates) of at least one of the pixels of the image 102 based on the translation of the portion of the 3-D point cloud. As described above, the color transformation is calculated by module 104 by determining the new position of the pixel or pixels associated with the translated points 202 in the point cloud 200. In step 310, module 104 modifies the data representing the image 102 to apply the calculated color transformation to the image. As described above, module 104 is configured to change the color data of the pixels associated with the translated points 202 of cloud 200 to reflect the new coordinates of the translated points 202 within the color space. A color corrected image 130 is then outputted to GUI 140 by module 112 to be displayed to the user, such that the user can monitor the color transformations applied. In this way, steps 304, 306, 308, 310 may be repeated and the color transformations applied to image 102 may be monitored by the user until the colors of the image reach a desired state.

Although method 300 is effective in changing the colors of an image by manipulating the 3-D point cloud produced by module 104, method 300 may result in blunt or abrupt color transformations on the pixels of the image associated with the points in the 3-D point cloud that have been translated. By selecting a single point or a group of points in the 3-D point cloud, and translating just those points, only the pixels associated with the translated points are altered in color. The neighboring pixels in the image are not altered, thus creating an undesirable contrast between the pixels associated with the moved points and unmoved points of the cloud.

To overcome the harsh contrast between the altered and unaltered pixels within a color corrected image, in one embodiment of the present disclosure, system 100 implements a lattice that is used to alter the colors of pixels associated to points in the point cloud neighboring points translated within the 3-D point cloud according to a fall-off, such that the undesirable contrast described above is not created in the color corrected image.

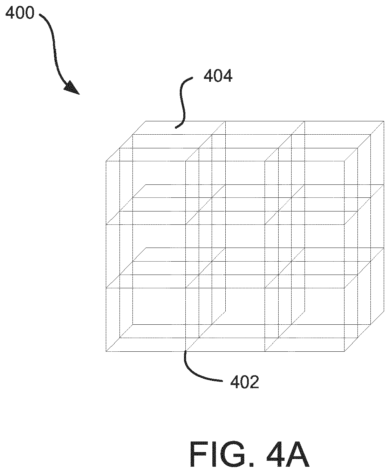

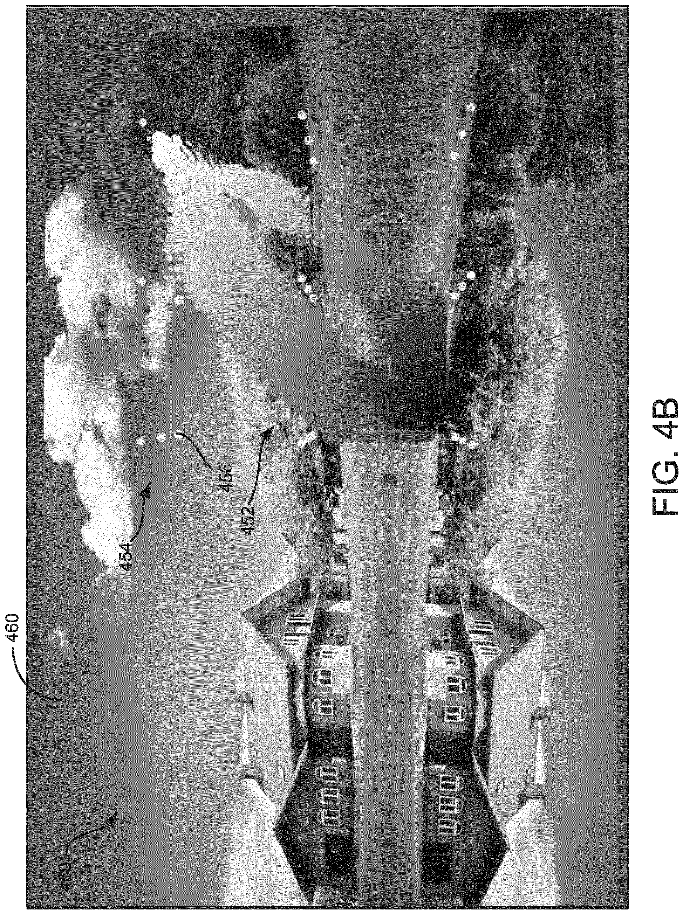

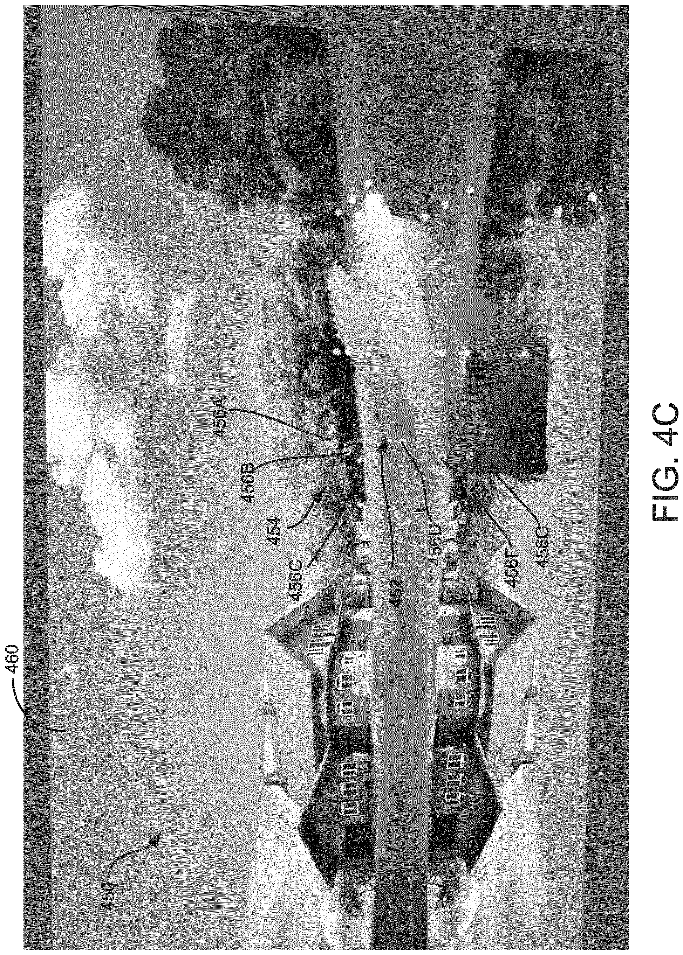

In one embodiment, lattice module 108 is configured to produce or generate a lattice to be disposed over the 3-D point cloud. For example, referring to FIG. 4, an exemplary lattice 400 is shown in accordance with the present disclosure. Lattice 400 includes a plurality of shapes or volumes 404 composed of lines or edges connected via vertices 402. In one embodiment, the shapes 404 forming the lattice structure are configured as sub-cubes of a larger cube forming the lattice 400. However, other shapes (e.g., rectangles, polygons, etc.) may be used to form lattice 400 in accordance with the present disclosure. Furthermore, the size of each sub-cube 404, number of sub-cubes 404 (and thus number of vertices 402) may be selected by the user to be generated by lattice module 108.

Lattice module 108 is configured to produce lattice 400 by binning the x, y, z bounds of the point cloud 200 generated by module 104. The bin size is selected by the user via user input to GUI 140. For example, if lattice module 108 generates a 4x4x4 lattice around the point cloud 200, the lattice 400 includes 64 points or vertices that may be manipulated by the user via user input to GUI 140 to deform the lattice 400. It is to be appreciated that the vertices of the lattice 400 and are distinct from the points in the 3-D cloud 200.

When the generated lattice 400 is disposed over the 3-D point cloud 200, each of the points 202 in the point cloud 200 are disposed in a sub-cube 404 of lattice 400. A user may select one or more vertices 402 of the lattice 400, and translate the vertices 402 in x, y, z space to deform the lattice 400. The changed positions of translated vertices 402 of lattice 400 are tracked by GUI 140 and sent to lattice module 108. Based on the changes positions the vertices 402 of lattice 402, lattice module 108 is configured to determine new positions of the points 202 in the 3-D point cloud 200 located proximately to the translated vertices 402 based on a falloff effect, such as a linear or spline volume falloff. For points 202 disposed in a sub-cube 404 with vertices 402 that have been translated, the new positions of the points 202 are calculated based on the positions of the 8 vertices 402 of the sub-cube 404 via linear interpolation. If a vertex 402 at the edge or corner of the lattice 400 (and hence at the edge or corner of the 3-D point cloud disposed in the lattice) is moved or translated via a user input, points 202 in the point cloud 200 close to the vertex 402 being moved are the ones mostly affected. Cloud points 202 farther away from the translated or moved vertex 402 may be affected very little, or not at all. In one embodiment, the lattice module 108 implements the De Casteljau Bezier evaluation algorithm to compute the cloud point positions given the lattice vertex positions.

By deforming the lattice 400, the 3-D point cloud 200 is also deformed or manipulated, but due to the nature of how the lattice 400 deforms the 3-D point cloud 200 (e.g., according to a fall-off effect), this results in more graceful transformation to neighboring points 202 in 3-D point cloud that does not result in harsh contrasts from color corrections. The implementation of lattice module 108 enables system 100 to be artistically more usable and operations that would have otherwise taken a substantial amount of time to do in prior art color correction tools, may be performed in fewer operations, in less time, and more intuitively by a user.

For example, referring to FIG. 4B, a GUI or environment 450 including a 3-D point cloud 452 disposed in a lattice 454 is shown in accordance with the present disclosure. It is to be appreciated that GUI 450 may be generated by GUI 140 of system 100 and responsive to receiving a digital image 460, 3-D point cloud 452 may be generated by 3-D point cloud module 104 and lattice 454 may be generated by lattice module 108.

As shown in FIG. 4B, after 3-D point cloud 452 is generated by module 104, lattice 454 is generated and disposed over cloud 452. Lattice 454 includes a plurality of vertices 456 that are selectable via user input to GUI 450 to deform lattice 454 and thus manipulate 3-D point cloud 452 to apply a color transformation to image 460. Referring to FIG. 4C, responsive to various user inputs, several vertices 456A-456G are translated in the x, y, z space to deform lattice 454. Based on the new positions of vertices 456A-456G, lattice module 108 calculates new positions for several of the points in point cloud 452. The new positions of the affected points in the point cloud 452 are used by 3-D point cloud module 104 to modify the data representing image 460 to apply the color transformations to image 460. Since the points in point cloud 452 have been translated according to a falloff affect, the color correction to image 460 is smooth and natural without abrupt contrasts.

It is to be appreciated that, in some embodiments, a user may select a portion of the 3-D point cloud generated for an image, such that a lattice is formed only over the portion of the 3-D point cloud generated. The lattice may then be deformed to color correct only the pixels associated to the points in the selected portion of the 3-D point cloud. Also, all of the vertices of the lattice may be selected and translated together to translate the points in the selected portion of the 3-D point cloud equally in a given direction within the color space the 3-D point cloud is distributed in.

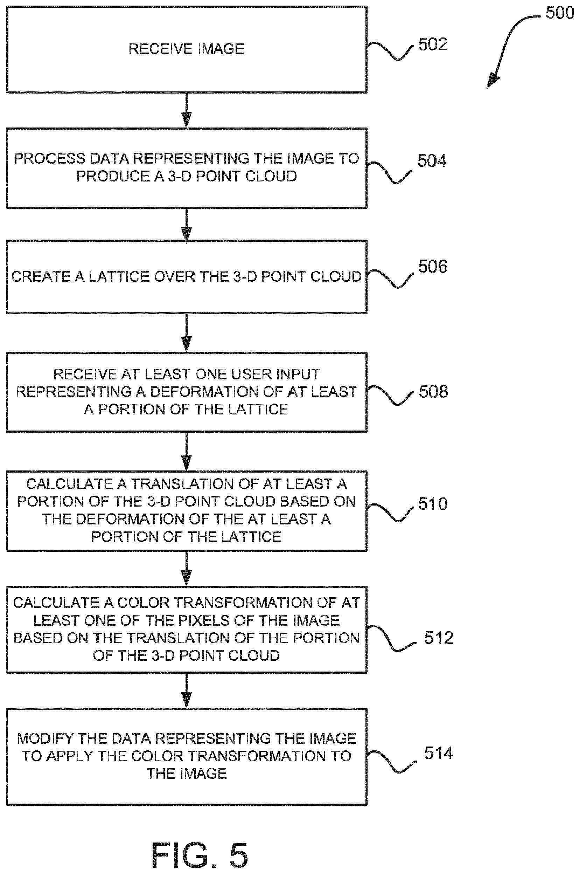

Referring to FIG. 5, a method 500 for color correcting a digital image based on deforming a lattice disposed over a 3-D point cloud of an image is shown in accordance with an embodiment of the present disclosure. It is to be appreciated that method 500 may be executed using the color correction system 100 described above.

In step 502, a 2-D reference image, such as image 102 or image 460, is received by color correction module 120 and provided to 3-D point cloud module 104. In step 304, 3-D point module 104 is configured to extract the data representing the image 102, 460 and process the data to produce a 3-D point cloud of a color distribution of pixels of the image 102, 460 based on the extracted data. In step 506, based on the 3-D point cloud produced, lattice module 108 creates a lattice over the 3-D point cloud. The 3-D point cloud of step 504, lattice of step 506, and the image 102 ,460 are outputted to GUI 140, 450 to be displayed to a user.

In step 508, GUI 140, 450 is configured to receive at least one user input representing a deformation of at least a portion (e.g., one or more vertices 402, 456) of the lattice. In step 510, lattice module 108 is configured to calculate a translation of at least a portion of the 3-D point cloud based on the deformation of the at least a portion of the lattice. As described above, the points in the 3-D point cloud are affected based on a falloff affect relative to the translated vertices of the lattice. In step 512, module 104 is configured to calculate the color transformation (e.g., the change in x, y, z coordinates) of at least one of the pixels of the image 102, 460 based on the translation of the portion of the 3-D point cloud. In step 514, module 104 modifies the data representing the image 102, 460 to apply the calculated color transformation to the image.

As described above, module 104 is configured to change the color data of the pixels associated with the translated points of the 3-D point cloud 200 to reflect the new coordinates of the translated points within the color space. A color corrected image 130 is then outputted to GUI 140, 450 by module 112 to be displayed to the user, such that the user can monitor the color transformations applied. In this way, steps 504-514 may be repeated and the color transformations applied to image 102, 460 may be monitored by the user until the colors of the image reach a desired state.

Although method 500 and the implementation of lattice deformation provides many advantages for color correcting images, using a lattice also results in many vertices of the lattice that do not control or affect (or have a minimal impact on) the points in the 3-D point cloud when these vertices are translated to deform the lattice. This is because of the resulting shape of the lattice structure, e.g., a cube. The 3-D point cloud generated from an image does not conform to a defined shape (such as a cube) and varies from image to image. Increasing the resolution of the lattice (i.e., by adding more sub-cubes and more vertices) does not solve this issue, since it makes it very difficult to select internal areas of the lattice to manipulate/deform.

To overcome the issues associated with using a lattice to manipulate a 3-D point cloud, in another embodiment of the present disclosure, a 3-D grid mesh of a 3-D point cloud is produced, where the 3-D mesh is manipulated to manipulate the 3-D point cloud and thus perform color transformations on one or more images. Another advantage of using a 3-D mesh is that manipulation of the 3-D mesh is not limited to using a lattice deformer and any tool for manipulating a 3-D mesh may be used.

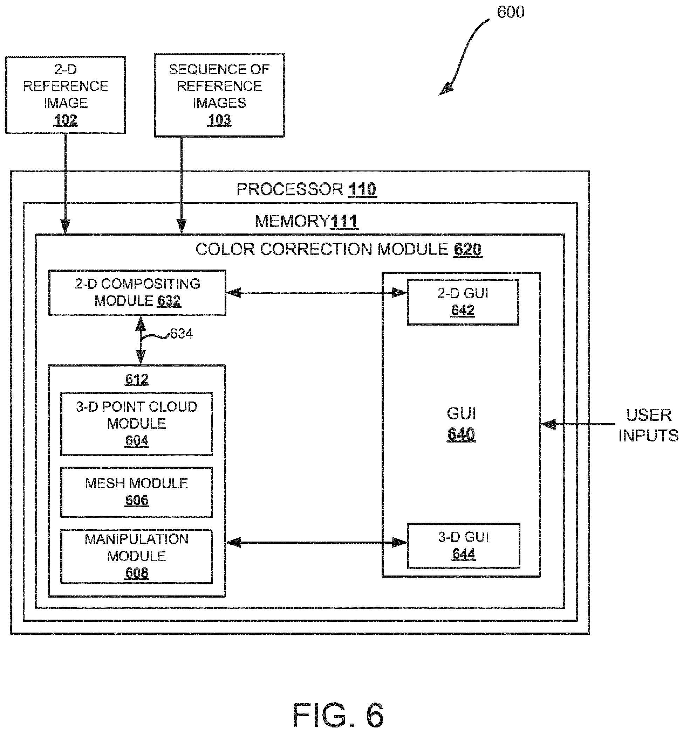

Referring to FIG. 6, a color correction system 600 is shown in accordance with the present disclosure. System 600 is implemented in processor 110 and memory 111. Memory 111 includes a color correction module 620. Color correction module 620 includes a 2-D compositing module 632, a 3-D digital content creation module 612, and GUI 640.

2-D compositing module 632 is configured to receive a 2-D reference image 102, extract the data representing the image 102, and store the data representing the image 102. Module 632 is configured to provide the data representing image 632 to module 612 via a data input/output (IO) interface 634 coupling modules 632 and 612. Module 612 includes 3-D point cloud module 604, which is configured to perform at least the functions of module 104 described above. Module 604 is configured to receive the data representing the image 102 and produce a 3-D point cloud. Module 612 further includes mesh module 606 and manipulation module 608. As will be described in greater detail below, mesh module 606 is configured to produce a 3-D mesh of a 3-D point cloud produced by module 604. The 3-D mesh shows the topology and connections between points of the 3-D point cloud, which helps the user get a visual sense of the connections between the colors of the reference image directly. Manipulation module 608 includes various tools and functions for manipulating the 3-D mesh produced by module 606.

GUI 640 includes a 2-D GUI 642 and a 3-D GUI 644. 2-D GUI 642 is configured as a displayable interface for module 632. 2-D GUI 642 is configured to receive one or more user inputs for interacting with module 632. Furthermore, 2-D GUI 642 is configured to receive the data representing image 102 and display image 102 in 2-D GUI 642. 3-D GUI 644 is configured as a displayable interface (e.g., a 3-D environment) for module 612. 3-D GUI 644 is configured to receive one or more user inputs for interacting with module 612. Furthermore, 3-D GUI 644 is configured to receive the 3-D mesh generated by module 606, display the 3-D mesh, and enable a user to user the various manipulation tools and function of manipulation module 608. As the 3-D mesh is manipulated via user inputs to 3-D GUI 644, information associated with the manipulations are provided to module 612 to calculate color transformation that are to be applied to image 102 based on the manipulations to the 3-D mesh. The color transformations are sent to module 632 via data IO 634, where 2-D compositing module 632 is configured to modify the data representing image 102 to include the color transformations determined by module 612, such that the color transformations are applied to image 102. As 3-D mesh is manipulated and color transformations are applied to image 102, the 3-D mesh displayed in 3-D GUI 644 is updated via information received from module 612 and the image 102 displayed in 2-D GUI 642 is updated via information received from module 632. In this way, the user can monitor changes made to image 102 and the 3-D mesh as the user uses system 600.

It is to be appreciated that, by including both a 2-D GUI 642 and a 3-D GUI 644 in GUI 640, latencies (particularly when working with high resolution images) that may be experienced by a user when the 3-D mesh updated are avoided because the tasks performed by GUI 640 are separated and performed by GUIs 642, 644. It is to be appreciated that, in some embodiments, GUIs 642 and 644 may be different software applications, while in other embodiments, GUIS 642 and 644 may be included within GUI 640 as part of a single software application.

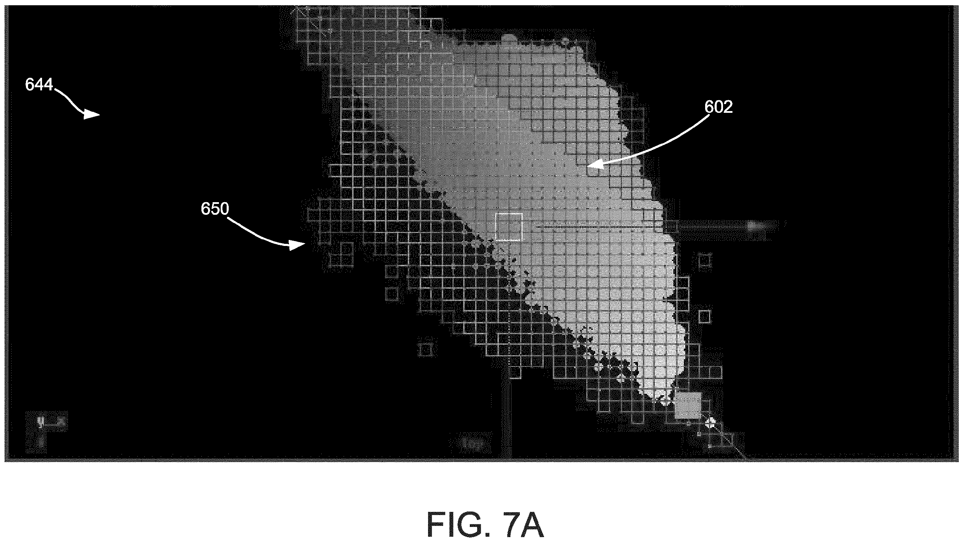

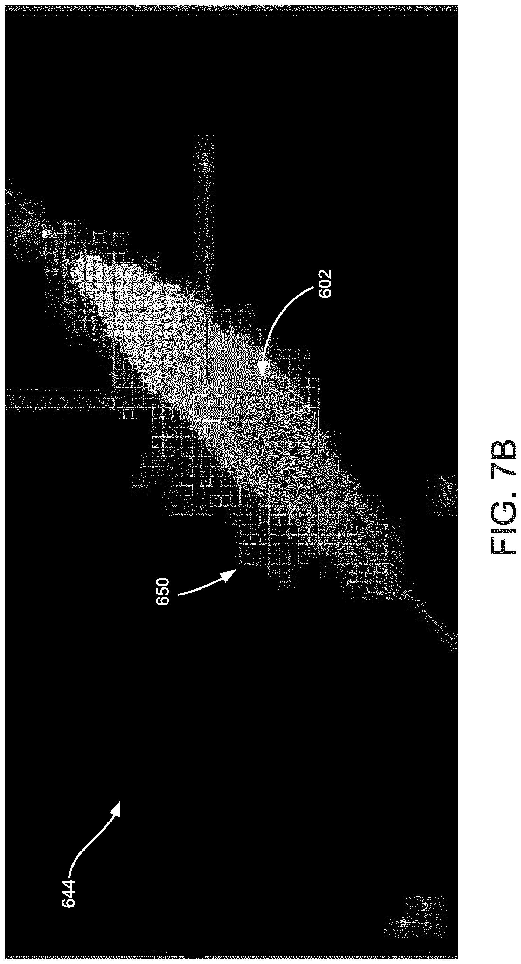

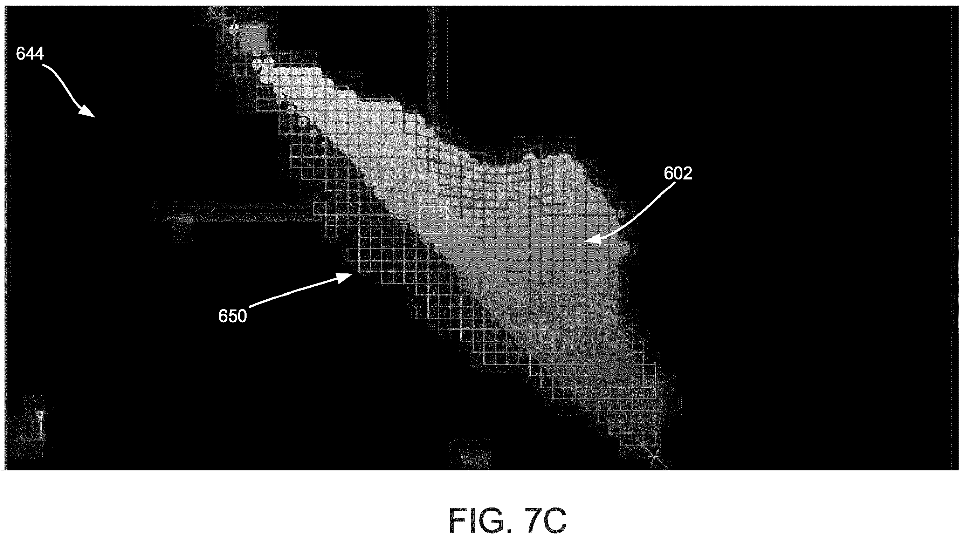

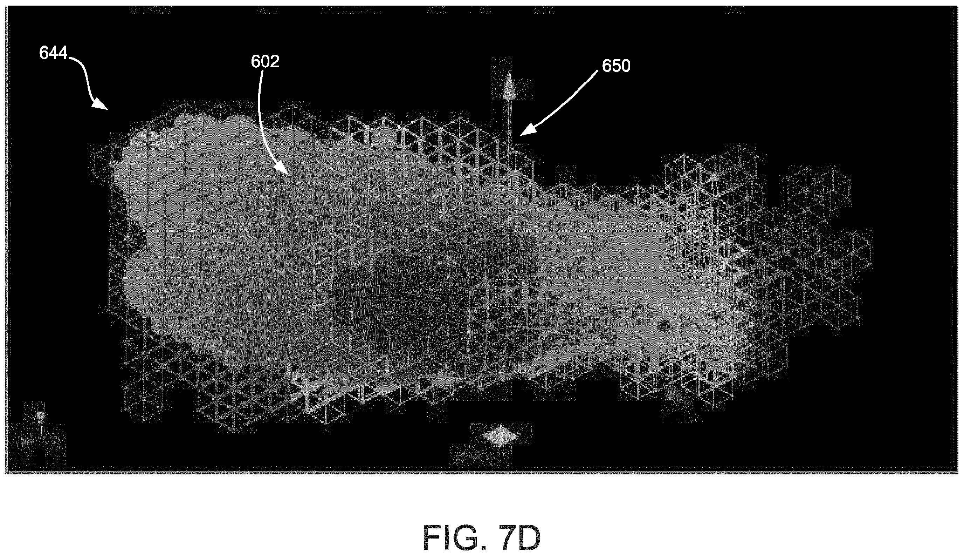

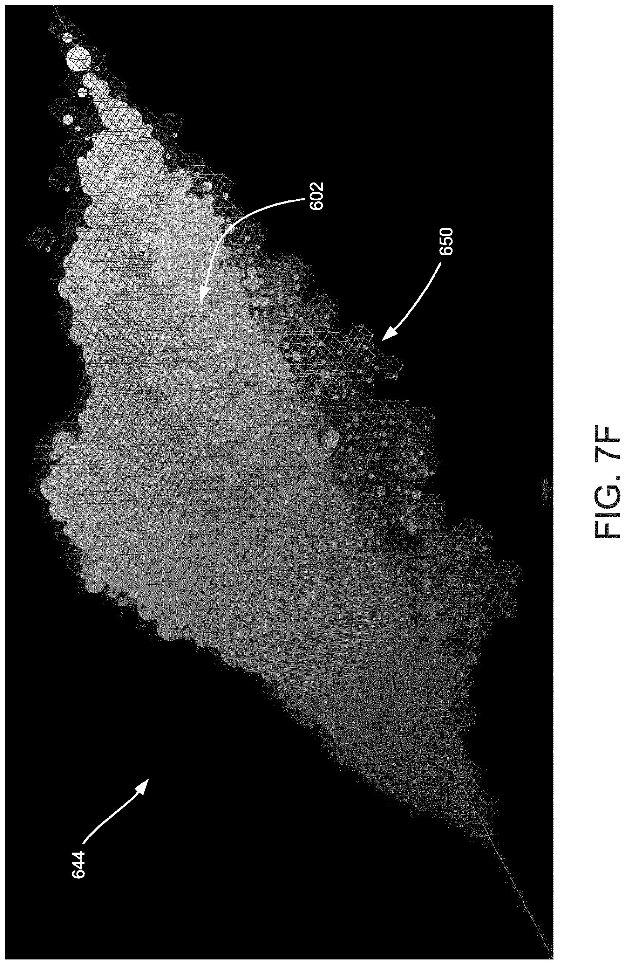

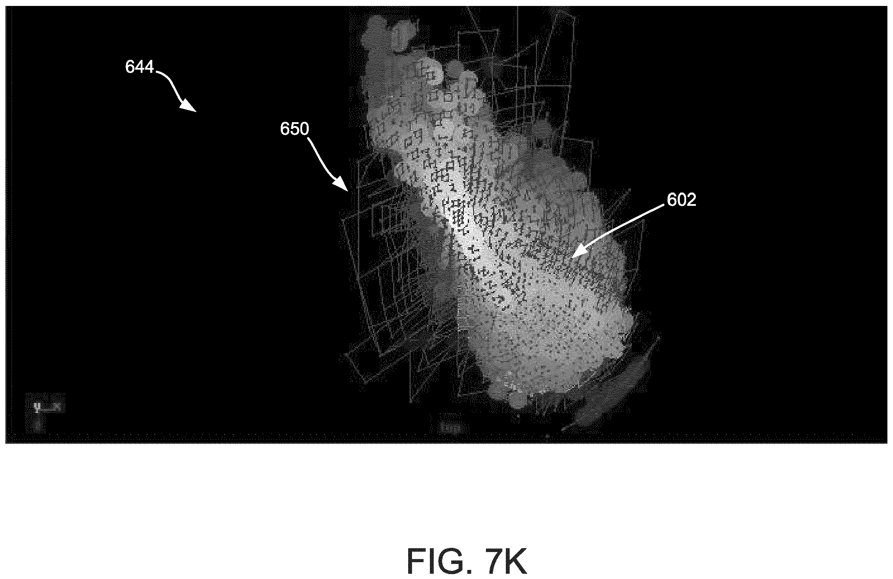

For example, referring to FIGS. 7A-7F, various views of GUI 644 including a 3-D mesh 650 are shown in accordance with the present disclosure. As described above, data representing an image, such as image 102, is processed by 3-D point cloud module 604 to produce a 3-D point cloud 602. Mesh module 606 is configured to wrap the 3-D point cloud 602 into a 3-D wired mesh 650. The 3-D mesh 650 is outputted by module 606 for display in 3-D GUI 644. As shown in FIGS. 7A-7F, the 3-D mesh 650 clearly shows to the user the relationships between the points of the 3-D cloud 602. 3-D GUI 644 is configured to receive user inputs for rotating, zooming in/out, and/or otherwise navigating 3-D mesh 650 to access any of the points or vertices of 3-D mesh 650.

It is to be appreciated that the position of the points in cloud 602 may be distributed in different mapping modes, such as, but not limited to, linear mapping, which is helpful to grated image to photo-realistic color distribution, OCIO (OpenColorIO) look-up table (LUT) mapping, and PQ (ST.2028 perceptual quantizer) mapping, which is helpful for ensuring system 600 can be used with both high dynamic range (HDR) and low dynamic range (LDR) images. It is to be appreciated that the LUT mapping mode that 3-D point cloud 602 is displayed within mesh 650 may be selected based on the current OCIO configuration.

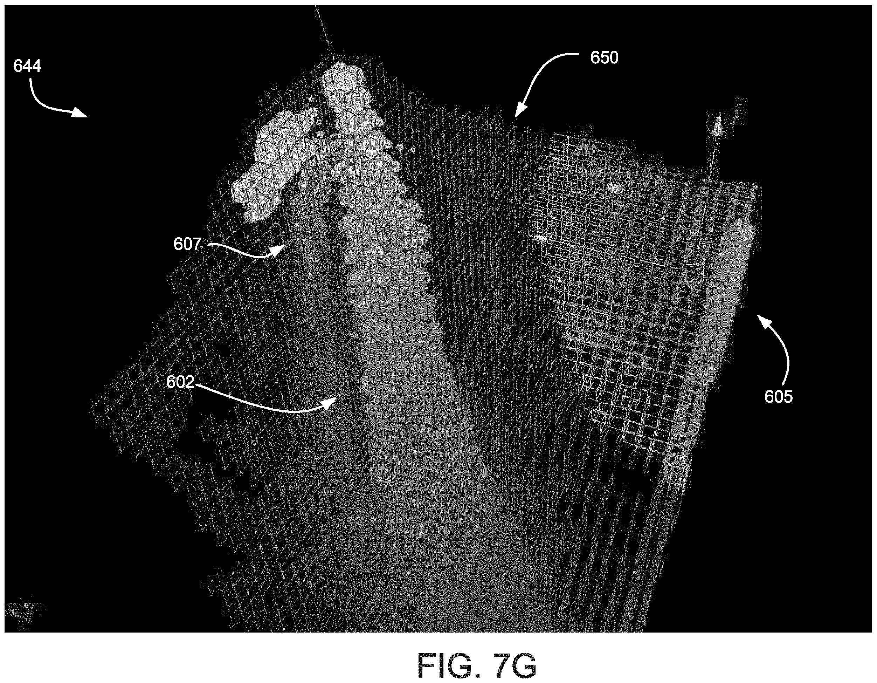

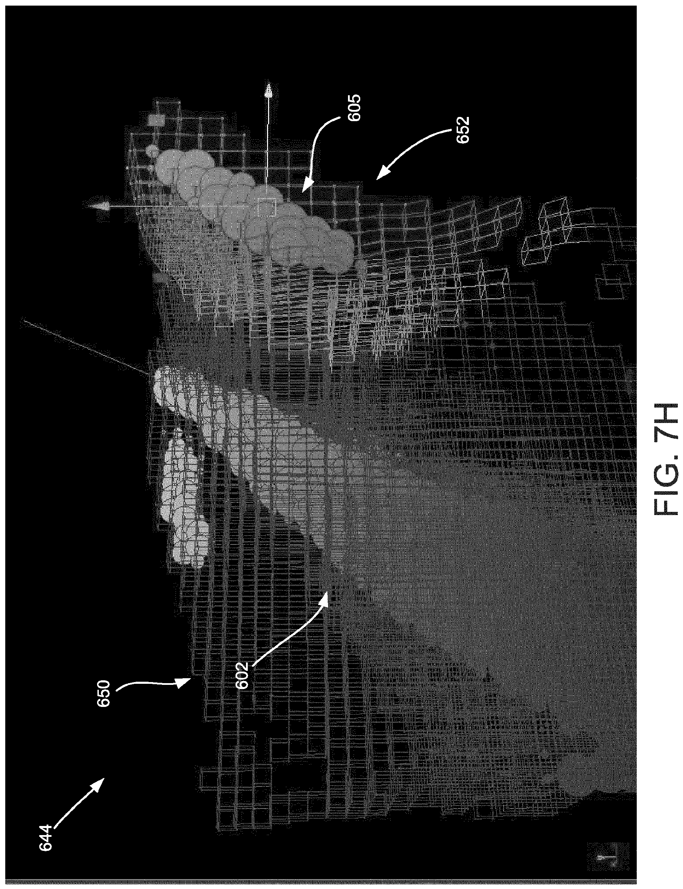

Manipulation module 608 is configured to enable a user to manipulate or deform 3-D mesh 650 by selecting a portion of 3-D mesh 650 and moving or translating the portion of mesh 650. For example, referring to FIG. 7G, a point in 3-D mesh 650 proximate to a portion 605 of 3-D point cloud 602 may be selected in GUI 644 and translated to deform 3-D mesh 650. Referring to FIG. 7H, after the point in 3-D mesh 650 is selected and translated, a portion 652 of 3-D mesh 650 is deformed. The information associated with the manipulation of 3-D mesh 650 is sent from GUI 644 to 3-D point cloud module 604. 3-D point cloud module 604 is configured to determine the new positions of the points in the 3-D point cloud 602 based on how 3-D mesh 650 has been deformed. In one embodiment, module 604 maintains a first 3-D array associated with the position of each of the points of 3-D point cloud 602 in 3-D mesh 650. The first 3-D array is continuously updated by module 604 based on the manipulation information received from GUI 644, such that the positions of any changed points of 3-D mesh 650 in the first 3-D array are updated when mesh 650 is manipulated. Then, module 604 is configured to perform a suitable interpolation method, such as, but not limited to tetrahedral interpolation, linear interpolation, nearest interpolation, etc., on the first 3-D array to calculate a second 3-D array associated with the color transformation of the points in the 3-D point cloud 602 of 3-D mesh 650. Then, module 604 is configured to use the calculated second 3-D array to update the 3-D point cloud 602 and 3-D mesh 650.

It is to be appreciated that, manipulation module 608 is configured such that the deformation of portion 652 of 3-D mesh 650 occurs according to a fall-off effect (with points farther from the translated point being translated less and vice versa). In this way, the deformation of portion 652 of 3-D mesh 650 also deforms or translates the points in portion 605 of 3-D point cloud 602 according to a fall-off effect, such as, but not limited to linear or spline volume fall-off.

The transformation information (i.e., the second 3-D array) calculated by 3-D point cloud module 604 is sent to 2-D compositing module 632. Module 632 then interpolates (e.g., via tetrahedral interpolation) the transformation information calculate the new color values for the pixels of the reference image 102. Module 632 then modifies the data representing the reference image 102 to include the new color values to apply the color transformation to reference image 102. In this way, the manipulation of 3-D mesh 650 causes the 3-D point cloud 602 to be color corrected, and also causes, image 102 to be color corrected.

For example, the first 3-D array has a size of:

$$(resolution+1) * (resolution+1) * (resolution+1),$$

where the resolution is defined by the data representing reference image 102 in module 632. If a user using system 600 is working in RGB space, module 604 is configured to initialize the first 3-D array (herein named: position_3d_lut) to be_position_3d_lut[i][j][k] = (i, j, k), which means position_3d_lut[i][j][k] is at position (i, j, k). After the 3-D mesh 650 associated with the image is manipulated by the user, module 604 is configured to update the first 3-D array to be position_3d_lut[i][j][k] = (I', j', k'). Since the data representing image 102 comprises color values, an inverse function (i.e., the interpolation described above) is used to translate the position transformation stored in the first 3-D array to a color transformation stored in the second 3-D array (herein named: color_3d_lut). The color transformation information in color_3d_lut is used by module 604 to update 3-D point cloud 602 and mesh 650 and is sent to module 632. The color_3d_lut received by module 632 is the same size as the position_3d_lut. If the value of color_3d_lut[i][j][k] is (r,g,b), it means the color (I/resolution, j/resolution, k/resolution) is transformed to color (r, g, b). If system 600 is being used in LDR and color_3d_lut includes a color (pr, pg, pb), module 632 calculates the 3 indices of color_3d_lut as pr_i = floor(pr*resolution), pg_i = floor(pg*resolution), pb_i =floor(pb*resolution). If tetrahedral interpolation is used by module 632 to determine the new color values for image 102, the transformation for color (pr, pg, pb) is determined by module 632 to be color_3d_lut[pr_i][pg_i][pb_i], color_3d_lut[pr_i+1][pg_i][pb_i], color_3d_lut[pr_i][pg_i+1][pb_i],color_3d_lut[pr_i][pg_i][pb_i+1],color_3d_lut[pr_i+1][pg_i+ 1][pb_i], color_3d_lut[pr_i+1][pg_i][pb_i+1], color_3d_lut[pr_i][pg_i+1][pb_i+1], color_3d_lut[pr_i+1][pg_i+1][pb_i+1]. Module 632 then modifies the data representing image 102 to include this new color value to apply the transformation to image 102.

In one embodiment, module 608 is configured to enable a user to soft-select points 605 in 3-D point cloud 602 that the user wishes to be altered according to a fall-off effect when 3-D mesh 650 is deformed and hard select points 607 in 3-D point cloud 602 that the user wishes to be altered without the fall-off effect (e.g., in the manner described above in relation to FIG. 1). In some embodiments, the soft and hard selected points in 3-D point cloud 602 may correspond to different portions of the reference image used to generate 3-D point cloud 602.

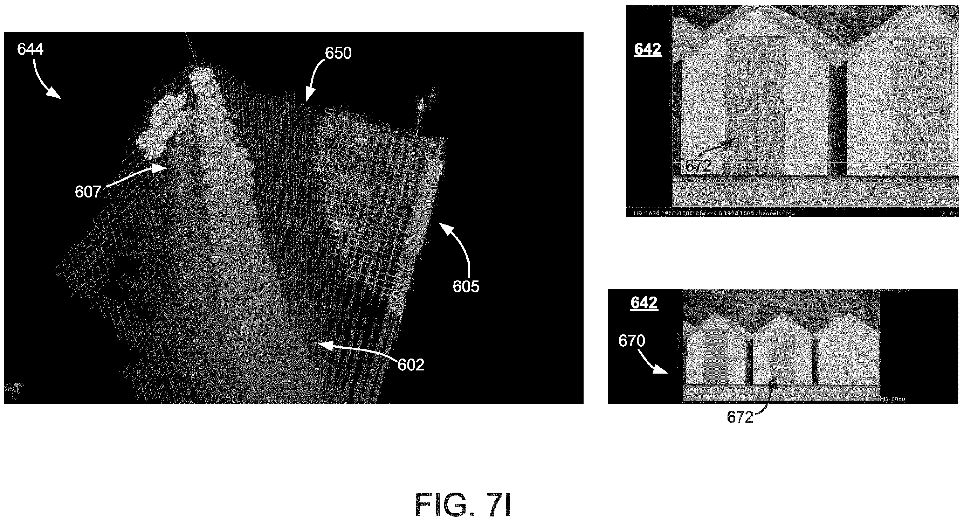

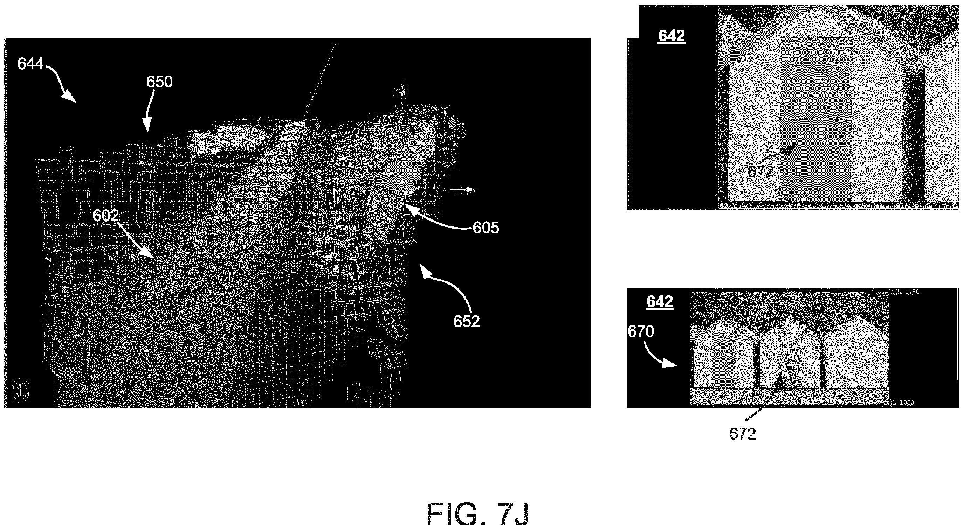

For example, referring to FIGS. 7I and 7J the 3-D point cloud 602 and 3-D mesh 650 of FIGS. 7G and 7H are shown in a multiwindow environment generated by GUIS 642 and 644. 3-D GUI 644 includes the 3-D point cloud 602 and 3-D mesh 650 and 2-D GUI 642 includes one or more views of the reference image 670 the user is color correcting. In one embodiment, GUIs 642 and 644 are displayed side-by-side. GUI 642 and module 608 are configured to enable a user to soft-select a portion 672 (e.g., a door) of image 670, such that the points 605 in 3-D point cloud 602 corresponding to the pixels in portion 672 are also selected. In one embodiment, an indication, such as a change to a first color of the portion 504 that is soft-selected is provided by GUI 644. GUI 642 is also configured to enable a user to hard-select a portion of image 670, such that points 607 in 3-D point cloud 602 corresponding to the pixels in the hard-selected portion are also selected. In one embodiment, an indication, such as a change to a second color of the portion 506 that is hard-selected is provided by GUI 644.

It is to be appreciated that a portion of an image is selected (whether it is a soft-selection or hard-selection), such as image 670, to perform color correction on in GUI 642, 2-D compositing module is configured to send the coordinates of each pixel in the selected portion of the image to 3-D digital content creation module 612. 3-D point cloud module 604 and mesh module 606 are configured to output 3-D point cloud 602 and 3-D mesh 650 to include an indication (e.g., via a distinguishing color) of the points in the cloud 602 corresponding to the pixels in the selected portion of the image and the portion of the mesh 650 that the selected points are disposed in. Furthermore, the points are selected (either in the form of a soft-selection or a hard-selection) such that when the user manipulates mesh 650, only the selected points are affected. It is to be appreciated that the portions of image 670 that the user selects do not have to be contiguous, a user may select multiple portions and pixels of image 670 that are not adjacent to one another in image 670.

In some embodiments, to help users identify the pixels they are color correcting accurately, when points in the 3-D mesh 650 are selected (either in the form of a soft-selection or a hard-selection), the selection information (i.e., which ports are selected) is sent from 3-D GUI 644 to module 632 via module 612. Module 632 is configured to cause the pixels represented by the selected points in 3-D mesh 650 to be highlighted in GUI 642 in the image 670 displayed. Hard-selected and soft-selected points may be highlighted in different colors.

Manipulation module 608 is further configured to enable a user to rotate a selected portion (or the entirety) of 3-D mesh 650. The rotation of the selected portion of the 3-D mesh 650 changes the positions/coordinates of the points in point cloud 602 within the selected portion of 3-D mesh 650 and thus causes a color transformation to be applied to image 102. Rotating the selected portion changes a range of color with almost the same hue but different luminance to another hue, while keeping the difference on luminance.

Manipulation module 608 is further configured to enable a user to scale a selected portion (or the entirety) of 3-D mesh 650. The scaling may include scaling up (i.e., enlarging) the selected portion or scaling down (i.e., shrinking) the selected portion. When the selected portion of 3-D mesh 650 is scaled, the positions/coordinates of the points in point cloud 602 of the selected portion are changed to be radially farther from each other or radially closer to each other about a central point. Scaling down a selected portion of 3-D mesh 650 can be useful for denoising certain colors within image 102. For example, when a selected portion of 3-D mesh 650 is scaled down, a volume of points in the selected portion shrinks to a smaller volume of points. That means a large range of colors in the image are transformed to a small range or even one same color. It is to be appreciated that, in some embodiments, when the selected portion of 3-D mesh 650 is scaled up or down, points disposed proximately to the selected portion are affected according to a falloff affect.

It is to be appreciated that the 3-D point cloud 602 and 3-D mesh 650 shown in FIGS. 7A-7J is produced by modules 604, 606 based on a reference image in the RGBA format and the x, y, z coordinates in the color space of GUI 644 in FIGS. 7A-7J are RGB coordinates. However, 3-D point cloud module 604 and mesh module 606 are configured to generated a 3-D point cloud 602 and 3-D mesh 650 in color spaces other than the RGB color space. System 600 is configured such that a user can select (via user input to GUI 644) what color space (e.g., RGB or HSV) the 3-D mesh 650 and 3-D point cloud 602 is to be outputted to, thus enabling a user to define the shape of 3-D mesh 650 and 30D point cloud 602 within GUI 644 (i.e., cube shape for RGB space and cylindrical shape for HSV shape). If the user selects the color space to be in HSV coordinates, HSV values are calculated by 3-D point cloud module 604 for each of the RGB values of the reference image (i.e., the RGB value for each pixel of the image). Then, module 604 generates a 3-D point cloud 602 with the points of the cloud 602 calculated distributed in HSV coordinates according to the HSV values calculated.

In one embodiment, if the reference image is a high dynamic range (HDR) image, the RBG values in the image can be greater than 1. In this case, the user may select via user input within 3-D GUI 644 the LUT mapping mode the user desires 3-D point cloud 602 for the HDR image to be distributed in. The user may select linear mapping (if the user desires for the point cloud 602 to be distributed according to the original color received with the reference image), OCIO LUT mapping (if the use desires for the point cloud 602 to be distributed in low dynamic range (LDR) values), or PG mapping (if the use desires for the point cloud 602 to be distributed in LDR values). If the user selects OCIO LUT or PG mapping, the original color values the reference image is received in are converted by module 604 to LDR values. Then, as described above, and the color values are converted to RGB space (0-1 cube) and HSV space (0-1 cylinder). The resulting RBG or HSV color values or data are used by modules 604 and 606 to generate the 3-D point cloud 602 and 3-D mesh 650 associated to the HDR reference image.

Manipulation module 608 is further configured to enable a user to manipulate 3-D mesh 650 using various deformer tools, such as, but not limited to a lattice deformer, a direct deformer, a wrap deformer, a selection deformer, and/or a blendshape deformer. For example, where a lattice deformer is used, a lattice may be created by module 608 and disposed over mesh 650, where the lattice is deformed to deform mesh 650. It is to be appreciated that module 608 may further include a deformer configured to read in an industry standard LUT file and deform the 3-D mesh according to the industry standard LUT file.

It is to be appreciated that all of the tools/functions included in module 608 for manipulating 3-D mesh 650 may be used to manipulate 3-D mesh 650 in a different manner. The tools/functions may be combined or used in different configurations to performs complex manipulations of 3-D mesh 650 to color correct a reference image. It is to be appreciated that other tools for deforming meshes not described above may be implemented in manipulation module 608 and used to deform 3-D mesh 650 without deviating from the scope of the present disclosure.

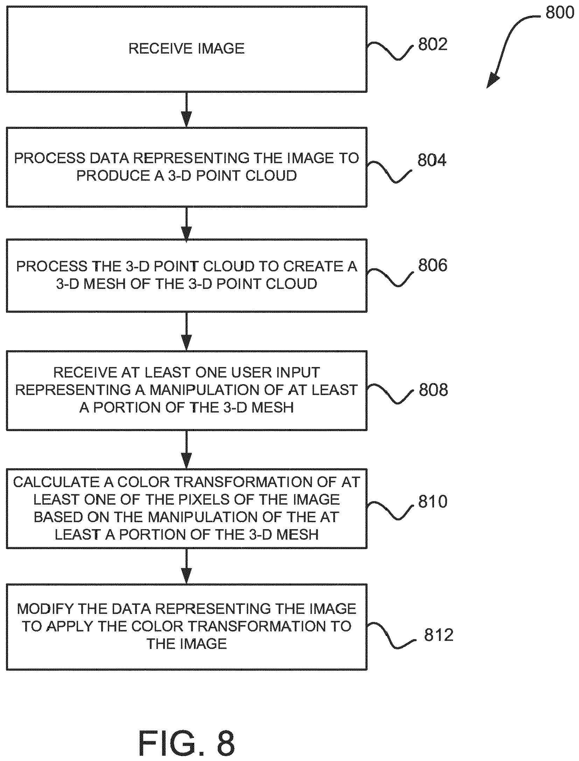

Referring to FIG. 8, a method for color correcting an image by manipulating the 3-D mesh of the image is shown in accordance with an embodiment of the present disclosure. It is to be appreciated that method 800 may be executed using the color correction system 600 described above.

In step 802, a 2-D reference image, such as image 102 is received by 2-D compositing module 632 and saved in module 632 or another part of memory 111. The data representing image 102 is provided by module 632 to module 612. In step 804, 3-D point module 604 is configured to process the data representing the image to produce a 3-D point cloud 602 of the image. In step 806, mesh module 606 is configured to process the 3-D point cloud to create a 3-D mesh 650 of the 3-D point cloud 602. As described above, the mesh 650 shows the connections (e.g., via line or wires) of the points of point cloud 602. The reference image 102 may be outputted by module 632 to GUI 642 for display and the 3-D mesh 650 may be outputted by module 606 to GUI 644 for display.

In step 808, GUI 644 is configured to receive at least one user input representing a manipulation of at least a portion of the 3-D mesh 650. As described above, the manipulation may be a translation, rotation, scaling, and/or deformation of 3-D mesh 650. The manipulation may include a combination of hard/soft selections of the at least a portion of the mesh 650. In this way, complication manipulations of mesh 650 are possible. Information associated with the manipulations are provided from 3-D GUI 644 to module 612. 3-D point cloud module 604 is configured to determine a color transformation of the 3-D point cloud 602 in mesh 650 (e.g., how the positions/coordinates of the points in cloud 602 have changed) based on the manipulations of the at least a portion of the 3-D mesh 650. In step 810, 2-D compositing module 632 is configured to calculate a color transformation of at least one of the pixels of the image 102 based on the manipulation of the at least a portion of the 3-D mesh 650. Then, in step 812, module 632 is configured to modify the data representing the image 102 to apply the color transformation to the image. As described above, in some embodiments, modules 632 and 606 may use a suitable interpolation method, such as tetrahedral interpolation, in applying color transformations to mesh 650 and image 102, respectively.

After the color corrections have been applied to image 102 and cloud 602 of mesh 650, image 102 is outputted for display to GUI 642 and 3-D mesh 650 is outputted for display to GUI 644 to be inspected by the user. If the user desired to make additional color transformations, method 800 may be repeated until image 102 reaches a desired state.

In one embodiment of the present disclosure, after a color transformation has been applied to a reference image 102 using system 600, the color transformation applied to the reference image 102 can also be applied to a second image or a sequence of images 103 provided to 2-D compositing module 632. The second image or sequence of image 103 may be related to the reference image, for example, they may be a series of frames in a video, or a group of related photos. In this way, a single reference image 102 can be color corrected using system 600, and the color transformations applied to reference image 102 can also automatically be applied to the second image or sequence of images 103, saving the user substantial time and effort. It is to be appreciated that, in this embodiment, the user can select via user input to 2-D GUI 642 which of the images 102 and/or 103 that user wants to be displayed in GUI 642 to be monitored.

In another embodiment of the present disclosure, a first 3-D mesh can be deformed to a second 3-D mesh using system 600. For example, if a target image is provided to module 612 (via module 632) a 3-D mesh for the target image can be created (in the manner described above) and saved to memory 111. Then a second image that the user wants to color correct may be provided to module 612 to create a second 3-D mesh for the second image. Using the wrap deformed in module 608, the user can select via user input to 3-D GUI 644 to deform the 3-D mesh of the second image to the 3-D mesh of the target image. The deformed mesh of the second image is then processed by modules 612 and 632 color correct the second image. In this way, the second image is color corrected to be similar to the target image.

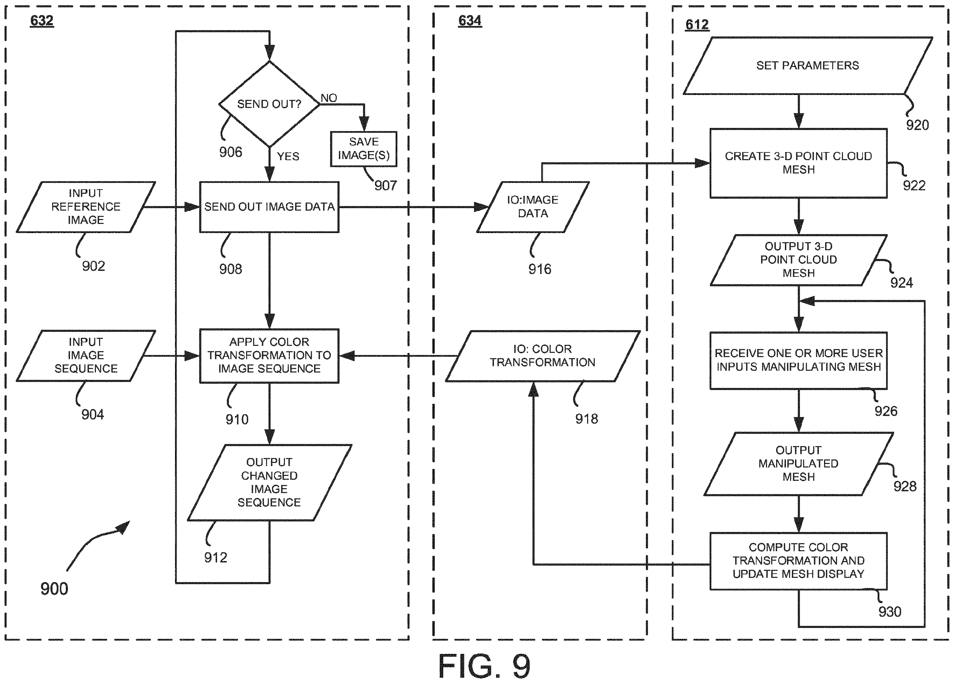

FIG. 9 illustrates a method 900 for color correcting a sequence of images in accordance with the present disclosure. It is to be appreciated that method 900 may be performed by color correction module 620 of system 600. Steps 902, 904, 906, 908, 910, and 912 may be performed by 2-D composition module 632 and 2-D GUI 642, steps 916 and 918 may be performed by data IO 634, and steps 920, 922, 924, 926, 928, and 930 may be performed by 3-D digital content creation module 612 and 3-D GUI 644.

In step 902, an input reference image, such as image 102 is received as input to 2-D compositing module 632. In step 908, the image data representing the image 102 is outputted from module 632 to data IO 634. In step 916, the data is outputted from data IO 634 to 3-D digital content creation module 612.

In step 920, the user may set via user input to GUI 644, parameters or setting, such as, but not limited to, resolution, color space, LUT mode, threshold, etc., to be used by modules 604 and 606 to create 3-D point cloud 602 and 3-D mesh 650. In step 922, 3-D point cloud module 604 creates a 3-D point cloud 602 using the received image data and mesh module 606 creates a 3-D mesh 650 of the 3-D point cloud 602. In step 924, the 3-D mesh 650 is outputted to 3-D GUI 644 for display to the user. It is to be appreciated that the input reference image 102 may also be outputted by module 632 to 2-D GUI 642 to be displayed to the user. Then, in step 926, 3-D GUI 644 receives one or more user inputs representing manipulations of the 3-D mesh 650 created in step 922. As described above, 3-D GUI 644 and manipulation module 608 are configured to enable a user to manipulate 3-D mesh 650 using any number of different manipulation tools/functions (e.g., various deformers, hard/soft selections and translations, scaling, rotation, etc.), thus deforming and altering the shape of mesh 650. In step 928, information associated with the manipulated 3-D mesh 650 (e.g., the positions of the translated vertices/points of mesh 650) is outputted to 3-D point cloud module 604.

In step 930, based on the received manipulation information, 3-D point cloud module 604 is configured to determine a color transformation to the points in 3-D point cloud 602 of 3-D mesh 650. After the color transformation data is calculated, 3-D point cloud module 604 is configured to determine via a suitable interpolation method, such as, tetrahedral interpolation, how the positions of each point in the point cloud 602 have been shifted based on the manipulation to mesh 650. A new 3-D mesh 650 including the corrected 3-D point cloud 602 is outputted to 3-D GUI 644 to be displayed and the method 900 returns to step 926, where the user may provide more user inputs to 3-D GUI 644 to make further manipulations of 3-D mesh 650.

The color transformation data computed in step 930 is sent from 3-D point cloud module 604 to data IO 634, and then from data IO 634 to 2-D compositing module 632 in real-time, in step 918. In some embodiments, the color transformation information is translated by 3-D point cloud module 604 to a standard LUT format, such as CSP (cinespace format), before the transformation information is sent to module 632 and saved as a file to memory 111 or another computer-readable medium for use by module 632 or any other 2-D compositing software.

In step 904, a sequence of images 103 (e.g., at least one second image) is received as input to 2-D compositing module 632. Then, the color transformation data received via data IO 634 is used by module 632 to modify the data (i.e., the pixel values) representing image 102 and images 103 and apply the color transformation to images 102 and 103. It is to be appreciated that the color of each of the pixels in images 102 and 103 is calculated by module 632 via a suitable interpolation method, such as tetrahedral interpolation, performed on the color transformation data. It is to be appreciated that, in some embodiments, the same interpolation method is used in steps 910 and 930.

In step 912, the color corrected images 102 and 103 are outputted by module 632 to 2-D GUI 642 to display the updated images 102 and 103 to the user. In step 914, the user is prompted to select whether the user wants to keep the updates to images 102 and 103. If the user selects (via user input to GUI 642) that that the user wants to keep the updates to image 102 and 103, in step 914, the updates to images 102 and 103 are saved to memory 111 and the user is then prompted if they want to send out the image data for image 102 to module 612 to make further color transformations to image 102, in step 906. If the user selects to send out the data, in step 906, the data representing the updated image 102 is sent to data IO 634, in step 916, and then to module 612, in step 922. Steps 922-932 may then be repeated to enable the user to make further color transformations (e.g., by manipulated mesh 650) to image 102. Alternatively, if the user selects to not send out the data, in step 907, the data representing images 102 and 103 are saved to memory 111 and the method ends.

It is to be appreciated that, in some embodiments, systems 100 and 600 may be combined into a single system enabling a user to choose to alter a 3-D point cloud associated with a reference image to color correct the reference image by: (1) directly manipulating the 3-D point cloud; (2) manipulating/deforming a lattice disposed over the 3-D point cloud; and/or (3) manipulating/deforming a 3-D mesh of the 3-D point cloud associated using one or more mesh manipulation tools. It is to be appreciated that the tools described above for manipulating a 3-D point cloud (i.e., direct manipulation, lattice deformation, 3-D mesh manipulation/deformation, etc.) are merely exemplary and that many other types of tools, now known and/or later developed, may be used with the above-described systems without deviating from the scope of the present disclosure.

The devices, systems, and methods of the present disclosure visualize the colors of a reference image in a chosen color space and provide an interactive means of changing the colors in the color space, while distributing those changes in a spatial way to the colors in the color space. The color space chosen, (e.g., RGB, HSV, and others), the visualization chosen (LUTs, histograms, etc.), the manipulation tools chosen (e.g., hard/soft selection, various deformation tools, such as lattice deformation, mesh deformation, etc.) and the interpolation methods chosen (e.g., linear interpolation, tetrahedral interpolation, etc.) in the systems described above enable the systems of the present disclosure to be immensely useful in a wide variety of ways. Furthermore, because an array of colors is being manipulated, and not just individual colors, the systems of the present disclosure treat the colors of an image as a whole, leading to more natural color corrections that are customized to relationship between various colors of a reference image. The representation of the colors of a reference image spatially so that a user can get a feel for the relationships and connections between the colors of the reference image and the ability to manipulate the colors as a group is an incredibly powerful tool for color correction that distinguishes the systems of the present disclosure from existing tools/techniques for color correction.

The systems 100, 600 and methods 300, 500, 800, 900 provide many advantages over existing techniques for color correction. Using systems 100, 600 and methods 300, 500, 800, 900:

1) Everything is visual. Colorists see an image described as a 3-D point cloud and/or a 3-D mesh, they see how colors relate to their neighbors, and can isolate the colors they want to manipulate. The user moves a color around, just moving the color point to what the user wants it to become, without having to think about numbers.

2) Colorists can address colors in complex ways, in one operation using the manipulated described above, thereby avoiding the problems of traditional multi-operator chains.

3) Colorists can non-linearly influence color to large or small areas of points, avoiding a single blunt operator which needs to be targeted by further means like masks.

4) Certain highly complex operations which are virtually impossible using other color correction techniques/tools become possible. For example, changing the fringe colors of sunset clouds which are falling behind complex branches and glowing leaves of a tree, while simultaneously desaturating the greens of the tree and subtly decreasing contrast to all of it is possible using systems 100, 600. With systems 100, 600, this complex combination of transforms, whilst handling the transitions of neighboring colors, is possible with one operation. As another example, in dealing with blue screen photography, and simultaneously turning the blue screen grey (as is commonly done), whilst removing the blue spill onto the subject (usually a person). In this scenario, one can directly address and remap those colors using systems 100, 600, rather than using complex algorithms which typically mangle source colors.

According to an aspect, a method is provided, including processing data representing an image to produce a 3-D point cloud of a color distribution of pixels of the image; processing the 3-D point cloud to create a 3-D mesh of the 3-D point cloud; receiving at least one user input representing a manipulation of at least a portion of the 3-D mesh; calculating a color transformation of at least one of the pixels of the image based on the manipulation of the at least a portion of the 3-D mesh; and modifying the data representing the image to apply the color transformation to the image.

According to another aspect, an apparatus is provided including at least one processor configured to process data representing an image to produce a 3-D point cloud of a color distribution of pixels of the image; process the 3-D point cloud to create a 3-D mesh of the 3-D point cloud; receive at least one user input representing a manipulation of at least a portion of the 3-D mesh; calculate a color transformation of at least one of the pixels of the image based on the manipulation of the at least a portion of the 3-D mesh; and modify the data representing the image to apply the color transformation to the image.

In an embodiment, the method includes or the apparatus is configured for outputting the 3-D mesh for display in a graphical user interface, wherein the graphical user interface is configured to receive the at least one user input.

In an embodiment, the method includes or the apparatus is configured for outputting the image for display in the graphical user interface.

In an embodiment, each point in the 3-D mesh is associated to a unique range of color included in the image.

In an embodiment, a size of each point in the 3-D mesh is proportional to a number of pixels in the image including the color associated to the corresponding point in the 3-D mesh.

In an embodiment, each point in the 3-D mesh includes coordinates that define a position, the coordinates associated to the color that is associated to the corresponding point in the 3-D mesh.

In an embodiment, the manipulation includes translating the at least a portion of the 3-D mesh from a first position to a second position.

In an embodiment, if the at least a portion of the 3-D mesh is selected according to a first type of selection, the points in the at least a portion of the 3-D mesh are affected according to a fall-off effect.

In an embodiment, if the at least a portion of the 3-D mesh is selected according to a second type of selection, the points in the at least a portion of the 3-D mesh are not affected according to a fall-off effect.

In an embodiment, the manipulation includes deforming the at least a portion of the 3-D mesh using at least one of a lattice deformer, wrap deformer, selection, and/or blendshape deformer.

In an embodiment, the manipulation includes at least one of scaling the at least a portion of the 3-D mesh and/or rotating the at least a portion of the 3-D mesh.

In an embodiment, the color transformation is calculated by interpolation.

In an embodiment, the method includes or the apparatus is configured for receiving at least one second image; and modifying the data representing the at least one second image to apply the color transformation to the at least one second image.

According to an aspect, a computer program product is provided for storing executable instructions that when executed by a computer perform at least part of the various methods of embodiments of the present disclosure.

According to an aspect, a non-transitory computer storage medium is provided for storing executable instructions that when executed by a computer perform at least part of the various methods of embodiments of the present disclosure.

It is to be appreciated that the usage of "and/or" in a list including two or more limitations or elements, as used herein, is intended to refer to all permutations and combinations of the listed two or more limitations. For example, "A, B, and/or C", is intended to include at least one of: A, B, C, AB, AC, BC, or ABC, and if order is important in a particular context, also BA, CA, CB, CBA, BCA, ACB, BAC, or CAB.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described embodiments of devices, systems, and methods for color correction, it is noted that modifications and variations can be made by persons skilled in the art in light of the above teachings. It is therefore to be understood that changes may be made in the particular embodiments of the disclosure disclosed which are within the scope of the disclosure as outlined by the appended claims.

**Claims**

1. A method (800, 900) comprising:

   processing (804, 922) data representing an image to produce a three-dimensional (3-D) point cloud of a color distribution of pixels of the image;
   processing (806, 922) the 3-D point cloud to create a 3-D mesh of the 3-D point cloud;
   receiving (808, 926) at least one user input representing a manipulation of at least a portion of the 3-D mesh;
   calculating (810, 930) a color transformation of at least one of the pixels of the image based on the manipulation of the at least a portion of the 3-D mesh; and
   modifying (812, 910) the data representing the image to apply the color transformation to the image.

2. An apparatus (900) comprising:
   at least one processor (110) configured for

   processing (804, 922) data representing an image to produce a three-dimensional (3-D) point cloud of a color distribution of pixels of the image;
   processing (806, 922) the 3-D point cloud to create a 3-D mesh of the 3-D point cloud;
   receiving (808, 926) at least one user input representing a manipulation of at least a portion of the 3-D mesh;
   calculating (810, 930) a color transformation of at least one of the pixels of the image based on the manipulation of the at least a portion of the 3-D mesh; and
   modifying (812, 910) the data representing the image to apply the color transformation to the image.

3. The method (800, 900) of claim 1 or the apparatus (900) of claim 2, wherein the method further includes or the apparatus is further configured for outputting (924) the 3-D mesh for display in a graphical user interface, the graphical user interface configured to receive the at least one user input.

4. The method (800, 900) of claim 1 or the apparatus (900) of claim 2, wherein the method further includes or the apparatus is further configured for outputting (912) the image for display in the graphical user interface.

5. The method (800, 900) of any one of claims 1, 3, and 4 or the apparatus (900) of any one of claims 2, 3 and 4, wherein each point in the 3-D mesh is associated to a unique range of color included in the image.

6. The method (800, 900) or the apparatus (900) of claim 5, wherein a size of each point in the 3-D mesh is proportional to a number of pixels in the image including the color associated to the corresponding point in the 3-D mesh.

7. The method (800, 900) or the apparatus (900) of claim 5, wherein each point in the 3-D mesh includes coordinates that define a position, the coordinates associated to the color that is associated to the corresponding point in the 3-D mesh.

8. The method (800, 900) of any of claims 1 and 3 to 7 or the apparatus (900) of any of claims 2 to 7, wherein the manipulation includes translating the at least a portion of the 3-D mesh from a first position to a second position.

9. The method (800, 900) or the apparatus (900) of claim 8, wherein if the at least a portion of the 3-D mesh is selected according to a first type of selection, the points in the at least a portion of the 3-D mesh are affected according to a fall-off effect.

**10.** The method (800, 900) or the apparatus (900) of claim 9, wherein if the at least a portion of the 3-D mesh is selected according to a second type of selection, the points in the at least a portion of the 3-D mesh are not affected according to a fall-off effect.

**11.** The method (800, 900) according to any one of claims 1 and 3 to 7 or the apparatus (900) of any of claims 2 to 7, wherein the manipulation includes deforming the at least a portion of the 3-D mesh using at least one of a lattice deformer, wrap deformer, selection, and/or blendshape deformer.

**12.** The method (800, 900) of according to any one of claims 1 and 3 to 7 or the apparatus (900) of any of claims 2 to 7, wherein the manipulation includes at least one of scaling the at least a portion of the 3-D mesh and/or rotating the at least a portion of the 3-D mesh.

**13.** The method (800, 900) of any of claims 1 and 3 to 12 or the apparatus (900) of any of claims 2 to 12, wherein the color transformation is calculated by interpolation.

**14.** The method (800, 900) of any of claims 1 and 3 to 13 or the apparatus (900) of any of claims 2 to 13, further comprising:

receiving (904) at least one second image; and
modifying (910) the data representing the at least one second image to apply the color transformation to the at least one second image.

**15.** A computer storage medium (111) storing executable instructions that when executed by a computer (110) perform the method (800, 900) according to any one of claims 1 and 3 to 14.

100

2-D REFERENCE
IMAGE
**102**

PROCESSOR **110**

MEMORY**111**

COLOR CORRECTION MODULE**120**

**112**

3-D POINT
CLOUD MODULE
**104**

COLOR
CORRECTED
2-D IMAGE
**130**

GUI
**140**

USER
INPUTS

LATTICE
MODULE
**108**

# FIG. 1

FIG. 2

300

```
┌─────────────────────────────────────────┐
│                                          │
│            RECEIVE IMAGE                 │── 302
│                                          │
└─────────────────────────────────────────┘
                    │
                    ▼
┌─────────────────────────────────────────┐
│  PROCESS DATA REPRESENTING THE IMAGE TO  │── 304
│       PRODUCE A 3-D POINT CLOUD          │
└─────────────────────────────────────────┘
                    │
                    ▼
┌─────────────────────────────────────────┐
│      RECEIVE AT LEAST ONE USER INPUT     │
│  REPRESENTING A TRANSLATION OF AT LEAST A│── 306
│       PORTION OF THE 3-D POINT CLOUD     │
└─────────────────────────────────────────┘
                    │
                    ▼
┌─────────────────────────────────────────┐
│  CALCULATE A COLOR TRANSFORMATION OF AT  │
│   LEAST ONE OF THE PIXELS OF THE IMAGE   │── 308
│ BASED ON THE TRANSLATION OF THE PORTION  │
│       OF THE 3-D POINT CLOUD             │
└─────────────────────────────────────────┘
                    │
                    ▼
┌─────────────────────────────────────────┐
│  MODIFY THE DATA REPRESENTING THE IMAGE  │
│  TO APPLY THE COLOR TRANSFORMATION TO    │── 310
│             THE IMAGE                    │
└─────────────────────────────────────────┘
```

# FIG. 3

400

404

402

FIG. 4A

FIG. 4B

FIG. 4C

```
┌─────────────────────────────────────────┐
│                                          │
│            RECEIVE IMAGE                 │  ⟩ 502
│                                          │
└─────────────────────────────────────────┘
                    │
                    ▼
┌─────────────────────────────────────────┐
│  PROCESS DATA REPRESENTING THE IMAGE TO  │  ⟩ 504
│     PRODUCE A 3-D POINT CLOUD            │
└─────────────────────────────────────────┘
                    │
                    ▼
┌─────────────────────────────────────────┐
│  CREATE A LATTICE OVER THE 3-D POINT CLOUD │  ⟩ 506
└─────────────────────────────────────────┘
                    │
                    ▼
┌─────────────────────────────────────────┐
│     RECEIVE AT LEAST ONE USER INPUT      │
│  REPRESENTING A DEFORMATION OF AT LEAST  │  ⟩ 508
│        A PORTION OF THE LATTICE          │
└─────────────────────────────────────────┘
                    │
                    ▼
┌─────────────────────────────────────────┐
│   CALCULATE A TRANSLATION OF AT LEAST A  │
│  PORTION OF THE 3-D POINT CLOUD BASED ON │  ⟩ 510
│    THE DEFORMATION OF THE AT LEAST A     │
│        PORTION OF THE LATTICE            │
└─────────────────────────────────────────┘
                    │
                    ▼
┌─────────────────────────────────────────┐
│  CALCULATE A COLOR TRANSFORMATION OF AT  │
│   LEAST ONE OF THE PIXELS OF THE IMAGE   │
│  BASED ON THE TRANSLATION OF THE PORTION │  ⟩ 512
│        OF THE 3-D POINT CLOUD            │
└─────────────────────────────────────────┘
                    │
                    ▼
┌─────────────────────────────────────────┐
│  MODIFY THE DATA REPRESENTING THE IMAGE  │
│  TO APPLY THE COLOR TRANSFORMATION TO    │  ⟩ 514
│              THE IMAGE                    │
└─────────────────────────────────────────┘
```

500

FIG. 5

600

| 2-D REFERENCE IMAGE **102** | SEQUENCE OF REFERENCE IMAGES **103** |

PROCESSOR **110**

MEMORY**111**

COLOR CORRECTION MODULE **620**

2-D COMPOSITING MODULE **632**

2-D GUI **642**

634

**612**

3-D POINT CLOUD MODULE **604**

MESH MODULE **606**

MANIPULATION MODULE **608**

GUI **640**

3-D GUI **644**

USER INPUTS

FIG. 6

FIG. 7A

EP 3 588 449 A1

FIG. 7B

FIG. 7C

FIG. 7D

EP 3 588 449 A1

FIG. 7F

FIG. 7G

FIG. 7H

FIG. 7I

FIG. 7J

FIG. 7K

800

RECEIVE IMAGE 802

PROCESS DATA REPRESENTING THE IMAGE TO PRODUCE A 3-D POINT CLOUD 804

PROCESS THE 3-D POINT CLOUD TO CREATE A 3-D MESH OF THE 3-D POINT CLOUD 806

RECEIVE AT LEAST ONE USER INPUT REPRESENTING A MANIPULATION OF AT LEAST A PORTION OF THE 3-D MESH 808

CALCULATE A COLOR TRANSFORMATION OF AT LEAST ONE OF THE PIXELS OF THE IMAGE BASED ON THE MANIPULATION OF THE AT LEAST A PORTION OF THE 3-D MESH 810

MODIFY THE DATA REPRESENTING THE IMAGE TO APPLY THE COLOR TRANSFORMATION TO THE IMAGE 812

FIG. 8

FIG. 9

632
- INPUT REFERENCE IMAGE 902
- INPUT IMAGE SEQUENCE 904
- SEND OUT? 906 — NO → SAVE IMAGE(S) 907
- SEND OUT? 906 — YES → SEND OUT IMAGE DATA 908
- APPLY COLOR TRANSFORMATION TO IMAGE SEQUENCE 910
- OUTPUT CHANGED IMAGE SEQUENCE 912

634
- IO: IMAGE DATA 916
- IO: COLOR TRANSFORMATION 918

612
- SET PARAMETERS 920
- CREATE 3-D POINT CLOUD MESH 922
- OUTPUT 3-D POINT CLOUD MESH 924
- RECEIVE ONE OR MORE USER INPUTS MANIPULATING MESH 926
- OUTPUT MANIPULATED MESH 928
- COMPUTE COLOR TRANSFORMATION AND UPDATE MESH DISPLAY 930

900

Europäisches
Patentamt

European
Patent Office

Office européen
des brevets

# EUROPEAN SEARCH REPORT

Application Number

EP 18 30 5831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/247305 A1 (BORG LARS [US] ET AL) 25 August 2016 (2016-08-25) * paragraphs [0071] - [0092]; figures 4,5 * | 1-15 | INV. G06T19/20 G06T5/00 |
| X | US 2007/247679 A1 (PETTIGREW DANIEL [US] ET AL) 25 October 2007 (2007-10-25) * column 63 - column 72 * | 1-15 | |
| X | US 2011/316851 A1 (PETTIGREW DANIEL [US] ET AL) 29 December 2011 (2011-12-29) * paragraph [0031] - paragraph [0043]; figures 4-9 * | 1-15 | |
| X | WO 2017/205803 A1 (ELECTRONICS FOR IMAGING INC [US]) 30 November 2017 (2017-11-30) * paragraph [0050] - paragraph [0093]; figures 3-6 * | 1-15 | |
| A | LI BEIBEI ET AL: "Color correction based on point clouds alignment in the logarithmic RGB space", VISUAL COMPUTER, SPRINGER, BERLIN, DE, vol. 31, no. 3, 29 January 2014 (2014-01-29), pages 257-270, XP035451817, ISSN: 0178-2789, DOI: 10.1007/S00371-013-0916-Z [retrieved on 2014-01-29] * the whole document * | 1-15 | TECHNICAL FIELDS SEARCHED (IPC) G06T |

The present search report has been drawn up for all claims

| Place of search | Date of completion of the search | Examiner |
|---|---|---|
| Berlin | 22 November 2018 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 588 449 A1**

## ANNEX TO THE EUROPEAN SEARCH REPORT
## ON EUROPEAN PATENT APPLICATION NO.

EP 18 30 5831

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2018

| Patent document cited in search report | Publication date | Patent family member(s) | Publication date |
|---|---|---|---|
| US 2016247305 A1 | 25-08-2016 | NONE | |
| US 2007247679 A1 | 25-10-2007 | US 2007247679 A1<br>US 2010188415 A1<br>WO 2007124457 A2 | 25-10-2007<br>29-07-2010<br>01-11-2007 |
| US 2011316851 A1 | 29-12-2011 | US 2007247475 A1<br>US 2011316851 A1 | 25-10-2007<br>29-12-2011 |
| WO 2017205803 A1 | 30-11-2017 | US 2017346992 A1<br>WO 2017205803 A1 | 30-11-2017<br>30-11-2017 |

EPO FORM P0459

For more details about this annex : see Official Journal of the European Patent Office, No. 12/82